# EUROPEAN PATENT SPECIFICATION

(11) **EP 2 805 834 B1**
(45) Date of publication and mention of the grant of the patent: **04.04.2018**
(21) Application number: 12862713.0
(22) Date of filing: 28.12.2012
(51) Int. Cl.: B29D 30/06, B29D 30/66, B60C 11/00, B60C 11/03, B29C 33/02, B29L 30/00, B29C 33/42

(54) **TIRE AND TIRE MOLDING CAST**
REIFEN UND REIFENGUSSFORMEN
PNEU ET PIÈCE COULÉE POUR MOULAGE DE PNEU

(30) Priority: 28.12.2011 JP 2011287678
(43) Date of publication of application: 26.11.2014
(73) Proprietor: Bridgestone Corporation, Tokyo 104-8340 (JP)
(72) Inventor: SHIGA, Yoshitaka, Kodaira-shi Tokyo 187-8531 (JP)
(74) Representative: Oxley, Robin John George
(86) International application number: PCT/JP2012/084306
(87) International publication number: WO 2013/100199

(56) References cited:
- WO-A1-2011/118856
- JP-A- H02 147 411
- JP-A- H05 318 621
- JP-A- H05 318 621
- JP-A- H07 257 111
- JP-A- 2002 248 911
- JP-A- 2004 189 195
- US-A- 1 896 574

## Description

### TECHNICAL FIELD

The present invention relates to a tire and a mold for molding a tire and, in particular, a tire capable of exhibiting excellent on-ice and on-snow performances and a mold for molding a tire for use in manufacturing the tire.

### BACKGROUND ART

Various proposals have conventionally been made to improve on-ice and on-snow performances of winter tires.

For example, PTL 1 proposes a technique of forming a plurality of sipes in respective blocks demarcated in a tread portion of a tire, to increase edge components and a snow-gripping effect within a ground contact surface, so that running performances of the tire on an icy (frozen) road surface and a snowy (snow-covered) road surface of the tire improve.

Further, PTL 2 proposes a technique of using foamed rubber as cap rubber in a tire having tread rubber constituted of cap rubber and base rubber (i.e. a tire having tread rubber of what is called "cap and base structure"), to significantly improve water drainage properties of the tread, so that on-ice and on-snow performances of the tire improve.

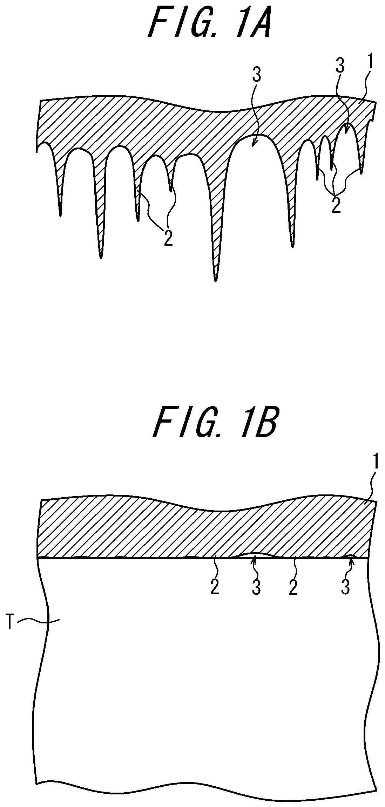

Yet further, PTL3 proposes with regard to surface configurations of a tread portion 1 of a tire a technique of providing a surface of the tread portion with projections 2 each having a sharp end as shown in FIG. 1A, to increase surface roughness and friction force between the tread surface and a road surface, so that on-ice and on-snow performances of the tire improve.

WO2011/118856 and DE102004010060 disclose tires with protrusions.

### CITATION LIST

### Patent Literature

PTL 1: JP2002-192914
PTL 2: JP11-301217
PTL 3: JP2009-067378

### SUMMARY OF THE INVENTION

### Technical Problems

However, the technique of forming sipes in the blocks described in PTL1 has a problem in that too many sipes decreases rigidities of the blocks to facilitate collapse of the blocks, thereby decreasing a ground contact area and thus deteriorating on-ice and on-snow performances of the tire.
Further, the technique of using foamed rubber as cap rubber described in PTL2 possibly decreases rigidities of the blocks as a whole due to use of the foamed rubber and therefore is not satisfactory in terms of wear resistance of the tire.
Yet further, the technique of providing a surface of the tread portion with projections each having a sharp end described in PTL3, in which rigidities of the projections are significantly low, may fail to exhibit desired performances when large load is exerted on the tire (e.g. when large load is exerted on front wheels due to a nose dive of a vehicle), in particular, because the projections are easily crushed. Specifically, in the technique of providing a surface of the tread portion with projections each having a sharp end, the projections 2 may be crushed as a result of contact with a road surface T and a volume of a gap 3for water drainage decreases, which deteriorates water drainage properties and possibly makes it impossible for the tire to exhibit desired on-ice and on-snow performances. Accordingly, the technique of PTL3 still need be improved in terms of on-ice and on-snow performances of the tire thereof.
Yet further, as a result of a study of the tires adopting the techniques described in PTLs 1 to 3 by the inventors of the present invention, it turned out that these conventional tires each have another problem in that they cannot exhibit satisfactory on-ice and on-snow performances when they are new, in particular, although the cause of this problem is unknown. Accordingly, the techniques of PTLs 1 to 3 still need be improved in terms of on-ice and on-snow performances of the tires thereof when they are new in particular.

The present invention aims at solving the aforementioned problems and an object thereof is to provide a tire exhibiting improved on-ice and on-snow performances and a mold for molding a tire for use in manufacturing (molding) the tire.

### Solution to the Problems

The inventors of the present invention made a keen study to solve the aforementioned problems.
As a result, the inventors of the present invention discovered that: specific microstructures formed in a ground contact surface of a tread portion of a tire can significantly improve on-ice and on-snow performances of the tire with suppressing deterioration of block rigidity and water drainage properties; and the specific microstructures can improve on-ice and on-snow performances of the tire in a satisfactory manner even when the tire is new, thereby completing the present invention.

The present invention has been contrived based on the aforementioned discoveries and primary structures thereof are as follows.
A tire of the present invention is characterized by the features of independent claim 1. It at least comprises: a tread portion having a ground contact surface; and a plurality of projections formed in at least a portion of the ground contact surface and each having a hemispherical shape protruding on the outer side in the tire radial direction, wherein each of the projections has the center of curvature thereof located on the inner side in the tire radial direction of the ground contact surface and a radius of curvature thereof in the range of >1 µm to ≤70 µm and an outer diameter D thereof is in the range of 0 x L < D ≤ 100 x L, wherein L is a distance between two adjacent projections and D is in the range of 5 µm to 70 µm. The ten point height of irregularities Rz at the ground contact surface of the tread portion due to the projections is in the range of 1µm to 50 µm.
It is possible to increase friction force between a surface of a tire and a road surface to improve on-ice and on-snow performances of the tire, while suppressing deterioration of block rigidity, by forming a large number of projections in at least a portion of a ground contact surface (a surface brought into contact with a road surface in running of a tire) of a tread portion of the tire. Further, each of these projections can have a rigid shape because the projection has: the center of curvature thereof located on the inner side in the tire radial direction of the ground contact surface of the tread portion; and a radius of curvature thereof ≥ 1 µm. Yet further, it is possible to suppress deterioration of water drainage properties by setting the radius of curvature of each of the projections to be ≤ 70 µm.
In the present invention, a "radius of curvature" of each of the projections represents 0.5 × the maximum diameter of the projection in a cross sectional view in the tire width direction, wherein the cross sectional view is selected such that the radius of curvature is largest therein. Such a "radius of curvature" as described above can be measured by photographing a cross section of the projection by using an electron microscope.

A mold for molding a tire of the present invention is characterized by the features of independent claim 4. It comprises: a ground contact surface molding surface for molding a ground contact surface of a tread portion of a tire; and a plurality of recessed portions formed in at least a portion of the ground contact surface molding surface, wherein each of the recessed portions has the center of curvature thereof located on the external side of the mold and a radius of curvature thereof in the range of ≥1 µm to ≤70 µm and an outer diameter d thereof is in the range of 0 x I < d ≤ 100 x I, wherein I is a shortest distance between two adjacent recessed portions and d is in the range of 5 µm to 70 µm. The ten point height of irregularities Rz at the ground contact surface of the tread portion due to the projections is in the range of 1µm to 50 µm.
It is possible to mold a tire having: a tread portion having a ground contact surface; and a large number of projections formed in at least a portion of the ground contact surface, wherein each of the projections has the center of curvature thereof located on the inner side in the tire radial direction of the ground contact surface and a radius of curvature thereof in the range of 1 µm to 70 µm (inclusive of 1 µm and 70 µm) so that the tire exhibits excellent on-ice and on-snow performances, by forming a large number of the recessed portions in at least a portion of the ground contact surface molding surface such that each of the recessed portions has the center of curvature thereof located on the external side of the mold and a radius of curvature thereof in the range of 1 µm to 70 µm (inclusive of 1 µm and 70 um).
In the present invention, a "radius of curvature" of each of the recessed represents 0.5 × the maximum diameter of the recessed portion in a cross sectional view in the tire width direction, wherein the cross sectional view is selected such that the radius of curvature is largest therein. Such a "radius of curvature" as described above can be measured by photographing a cross section of the recessed portion by using an electron microscope.

### Advantageous Effect of the Invention

According to the present invention, it is possible to provide a tire capable of exhibiting excellent on-ice and on-snow performances and a mold for molding a tire applicable to molding the tire.

### BRIEF DESCRIPTION OF THE DRAWINGS

FIG. 1A is a schematic cross sectional view schematically showing a ground contact surface of a tread portion of a conventional tire.
FIG. 1B is a schematic cross sectional view schematically showing a state where the ground contact surface of the tread portion of the conventional tire is in contact with a road surface when load is exerted on the tire.
FIG. 2 is a cross sectional view in the tire width direction of a tire according to one embodiment of the present invention.
FIG. 3A is a plan view schematically showing in an enlarged manner a configuration of a portion of a ground contact surface of a tread portion of the tire of FIG. 2.
FIG. 3B is a cross sectional view in the tire width direction schematically showing in an enlarged manner the configuration of a portion of a ground contact surface of a tread portion of the tire of FIG. 2.

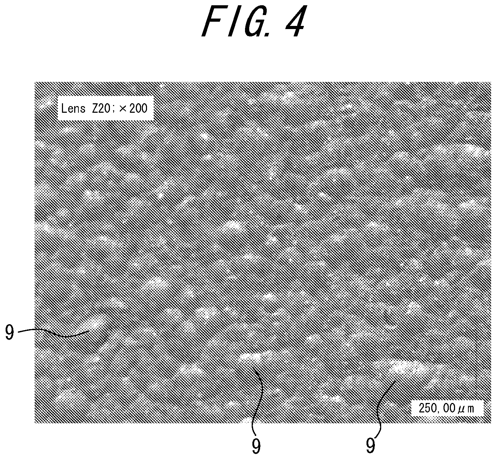

FIG. 4 is a SEM (scanning electron microscope) image of a ground contact surface of a tread portion of a tire not according to the present invention.
FIG. 5 is a schematic partial perspective view schematically showing a portion of a mold for molding a tire according to one embodiment of the present invention.
FIG. 6A is a plan view schematically showing in an enlarged manner a configuration of a portion of a ground contact surface molding surface of the mold for molding a tire of FIG. 5.
FIG. 6B is a cross sectional view in the tire width direction schematically showing in an enlarged manner the configuration of a portion of a ground contact surface molding surface of the mold for molding a tire of FIG. 5.

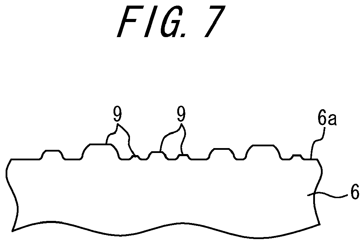

FIG. 7 is another example of a configuration of a portion of a ground contact surface of a tread portion of a tire not according to the present invention.

### DESCRIPTION OF THE EMBODIMENTS

A tire and a mold for molding a tire of the present invention will be described hereinafter. The tire of the present invention is characterized in that predetermined microstructures are formed in at least a portion of a ground contact surface (a surface to be brought into contact with a road surface) of a tread portion thereof so that the tread surface (the ground contact surface) has a predetermined configuration. The mold for molding a tire of the present invention is used for manufacturing the tire of the present invention and characterized in that predetermined microstructures are formed in an inner surface of the mold, specifically, in at least a portion of a ground contact surface molding surface for molding the ground contact surface of the tread portion of the tire, so that the ground contact surface molding surface has a predetermined configuration.

### <Tire>

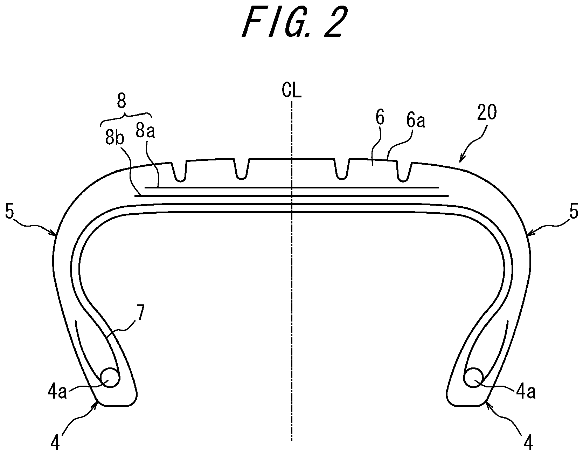

FIG. 2 is a cross sectional view in the tire width direction of a tire according to one embodiment of the tire of the present invention.

As shown in FIG. 2, a tire 20 of the present embodiment has a pair of bead portions 4, a pair of sidewall portions 5 extending from the respective bead portions 4 toward the outer side in the tire radial direction, respectively, and a tread portion 6 extending across the sidewall portions 5.

Further, the tire 20 of the present embodiment includes: a carcass 7 provided in a troidal shape between a pair of bead cores 4a embedded in the pair of the bead portions 4; a belt 8 constituted of two belt layers 8a, 8b and provided on the outer side in the tire radial direction of the carcass 7; and tread rubber made of non-foamed rubber and provided on the outer side in the tire radial direction of the belt 8.

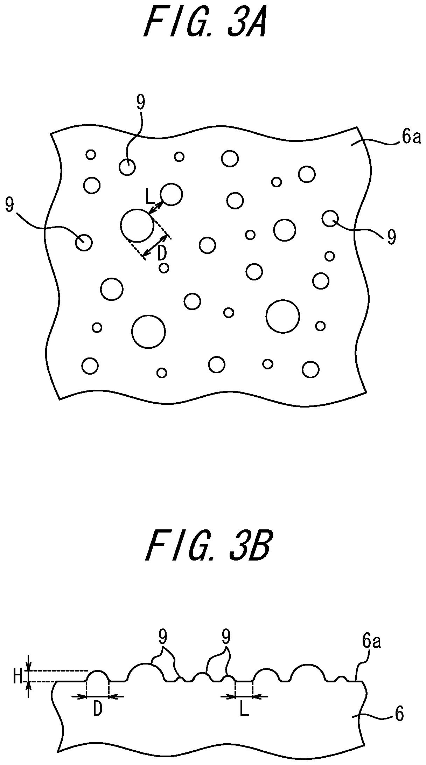

In the present invention, microprojections each having a predetermined shape are formed in at least a portion (in the entire portion in the present embodiment) of a ground contact surface of a tread portion of the tire 20. Specifically, as shown in FIG. 3A as an enlarged plan view of a ground contact surface 6a of the tread portion, FIG. 3B as an enlarged cross sectional view in the tire width direction of the ground contact surface 6a side of the tread portion, a large number of microprojections 9 each having a hemispherical shape protruding toward the outer side in the tire radial direction, the center of curvature thereof located on the inner side in the tire radial direction of the ground contact surface 6a, and a radius of curvature thereof in the range of 1 µm to 70 µm (inclusive of 1 µm and 70 µm) are formed at the entire ground contact surface 6a of the tread portion of the tire according to the present embodiment.

It is possible in the tire 20 to improve on-ice and on-snow performances in a satisfactory manner, while suppressing deterioration of block rigidity and water drainage properties, because a large number of the projections 9 are formed in the ground contact surface of the tread portion thereof.
Specifically, the tire 20 having a large number of the projections 9 formed thereon can: remove a water film on a road surface (i.e. demonstrate good water drainage) by utilizing gaps between the projections 9 when a ground contact surface of a tread portion of the tire is brought into contact with the road surface; and increase friction force between the ground contact surface of the tread portion and the road surface, thereby improving on-ice and on-snow performances of the tire. Further, in the tire 20, each of the projections 9 has a highly rigid shape because the projection has a hemispherical shape protruding toward the outer side in the tire radial direction, the center of curvature thereof located on the inner side in the tire radial direction of the ground contact surface of the tread portion, and a radius of curvature thereof ≥ 1 µm.
Yet further, a sufficiently large volume of the gaps between the projections 9 is ensured to improve water drainage properties in the tire 20 because each of the projections has a radius of curvature ≤ 70 µm.
Formation of too many sipes and/or use of foamed rubber is not necessary in the tire 20 because the tire 20 improves on-ice and on-snow performances thereof with suppressing deterioration of water drainage properties by provision of the microprojections 9 each having a predetermined shape.
Further, the tire 20 can demonstrate satisfactory on-ice and on-snow performances when the tire is new (in an unused state), although the detailed mechanism thereof is not known.

Accordingly, the tire 20 can improve on-ice and on-snow performances thereof even in a brand new state, while well suppressing deterioration of block rigidity and water drainage properties. The tire of the present invention may have the projections formed at a ground contact surface of the tread portion such that each of the projections has the center of curvature located on the inner side in the tire radial direction of the ground contact surface of the tread portion and a radius of curvature of either < 1 µm or > 70 µm. In this case, however, the number of the projections having the center of curvature located on the inner side in the tire radial direction of the ground contact surface of the tread portion and a radius of curvature of either < 1 µm or > 70 µm is preferably 10% or less of the total number of the projections. A satisfactorily good effect can be obtained by formation of the projections when the proportion of the projections having the center of curvature located on the inner side in the tire radial direction of the ground contact surface of the tread portion and a radius of curvature of either < 1 µm or > 70 µm is 10% or less with respect to the projections as a whole.
"The number of the projections each having a radius of curvature of either < 1 µm or > 70 µm" can be measured by photographing the tread portion by using an electron microscope.

The radius of curvature of each of the projections 9 is preferably in the range of 1 µm to 50 µm (inclusive of 1 µm and 50 µm) in the tire 20. The radius of curvature of the projection 9 ≥ 1 µm ensures sufficiently high rigidity of the projection 9 and thus satisfactorily good water drainage. The radius of curvature of the projection 9 ≤ 50 µm ensures a sufficiently large volume of gaps between the projections 9 to well improve water drainage properties even when a large number of the projections 9 are formed.

The configuration of each of the projections 9 is hemispherical in the tire 20. The projection 9 having a hemispherical configuration is less likely to be crushed and thus can ensure good water drainage than otherwise.

Further, the height H of each of the projections 9 formed at a ground contact surface of the tread portion is preferably in the range of 1 µm to 50 µm in the tire 20. The height H of the projection 9 ≥ 1 µm ensures a sufficiently large volume of gaps between the projections 9 to well improve water drainage properties. The height H of the projection 9 ≤ 50 µm ensures sufficiently high rigidity of the projection 9 and thus satisfactorily good water drainage.
In the present invention, the "height of the projection 9" represents, provided that: a first imaginary plane is an imaginary plane passing through the rear end (the outermost end in the tire radial direction) of the projection 9 to extend orthogonal to the tire radial direction; and a second imaginary plane is an imaginary plane closest to the first imaginary plane among the imaginary planes adjacent to the radial direction innermost contour line of the projection 9 and extending orthogonal to the tire radial direction, a distance in the tire radial direction between the first imaginary plane and the second imaginary plane.
The height of each of the projections 9 can be measured by a SEM or the like.

In the present invention, a large number of the projections formed in at least a portion of a ground contact surface of the tread portion are preferably solid foam-shaped projections having an outer diameter D in the range of 5 µm to 70 µm. It is possible to further increase friction force between a surface of the tire and a road surface to further improve on-ice and on-snow performances, while well suppressing deterioration of block rigidity, by forming a large number of solid foam-shaped projections in at least a portion of a ground contact surface (a surface to be brought in contact with a road surface in running of a tire) of the tread portion of the tire. In this regard, setting the outer diameter of each of the solid foam-shaped projections to be in the range of 5 µm to 70 µm is effective in terms of further suppressing deterioration of water drainage properties. Formation of a large number of the solid foam-shaped projections makes it possible for the tire to remove a water film on a road surface (i.e. demonstrate good water drainage performance) through use of gaps between the solid foam-shaped projections when the ground contact surface is in contact with a road surface. Further, formation of a large number of the solid foam-shaped projections increases friction force between a ground contact surface of the tread portion and a road surface, thereby further improving on-ice and on-snow performances of the tire.
Yet further, a solid foam-like configuration (e.g. a hemispherical configuration) of each of the solid foam-shaped projections allows forces to be relatively evenly exerted on the solid foam-shaped projection, whereby the solid foam-shaped projection is less likely to be crushed and can ensure good water drainage properties than otherwise when relatively large load is applied on the tire.
Yet further, setting the outer diameter D of each of the solid foam-shaped projections to be ≥ 5 µm ensures high rigidity of the solid foam-shaped projection, whereby the solid foam-shaped projection is less likely to be crushed and can ensure good water drainage properties than otherwise when relatively large load is applied on the tire. Yet further, setting the outer diameter D of each of the solid foam-shaped projections to be ≤ 70 µm ensures a sufficiently large volume of gaps between the solid foam-shaped projections and thus good water drainage properties when a relatively large number of the projections are formed.
The outer diameter D of each of the solid foam-shaped projections is preferably in the range of 10 µm to 20 µm for the same reasons as described above in the present invention. Specifically, setting the outer diameter D of each of the solid foam-shaped projections to be ≥ 10 µm further increases rigidity of the solid foam-shaped projection, whereby the solid foam-shaped projection can ensure satisfactorily good water drainage properties. Setting the outer diameter D of each of the solid foam-shaped projections to be ≤ 20 µm more reliably ensures a sufficiently large volume of gaps between the solid foam-shaped projections and thus good water drainage properties than otherwise when a relatively large number of the projections are formed.
An "outer diameter" of each of the solid foam-shaped projections represents the maximum diameter of the solid foam-shaped projection in a plan view in the present invention, as shown in FIG. 3A. Such an "outer diameter" of each of the solid foam-shaped projections can be measured by photographing a ground contact surface of the tread portion by using a laser microscope, an electron microscope or the like. Further, a "solid foam-shaped projection" represents a solid projection having a foam-like outer peripheral configuration and examples of a solid "foam-like configuration" include a hemispherical configuration, as described above.

In the tire of the present invention, the outer diameter D of a plurality of the (micro)projections formed in at least a portion of a ground contact surface of the tread portion is in the range of 5 µm to 70 µm and D also satisfies 0 × L < D ≤ 100 × L, wherein L represents a distance between the two adjacent projections. It is possible to further increase friction force between a surface of the tire and a road surface to further improve on-ice and on-snow performances, while well suppressing deterioration of block rigidity, by forming a large number of the projections in at least a portion of a ground contact surface (a surface to be brought in contact with a road surface in running of a tire) of the tread portion of the tire. In this regard, setting the outer diameter D of each of the projections to be in the range of 5 µm to 70 µm and satisfy 0 × L < D ≤ 100 × L successfully suppresses deterioration of water drainage properties. Specifically, as described above, sufficiently high rigidity of each of the projections is ensured because the outer diameter D of the projection is set to be ≥ 5 µm, whereby the projection is less likely to be crushed and can reliably ensure good water drainage properties when relatively large load is applied on the tire. Further, a sufficiently large volume of gaps between the projections and thus good water drainage properties are ensured even when a relatively large number of the projections are formed because the outer diameter D of each of the projections is set to be ≤ 70 µm.
Yet further, setting the outer diameter D of each of the projections to satisfy D > 0 × L (L represents the shortest distance between the two adjacent projections) increases friction force between a ground contact surface of the tread portion and a road surface in a more satisfactory manner and ensures high rigidity of the projection than otherwise to improve water drainage properties of the tire. Yet further, setting the outer diameter D of each of the projections to be D ≤ 100 × L ensures a sufficiently large volume of gaps between the projections and thus good water drainage properties of the tire.
In this connection, the outer diameter of each of the projections is more preferably in the range of 10 µm to 20 µm for the same reasons as described above.
Further, the outer diameter D of each of the projections more preferably satisfies 30 × L < D ≤ 100 × L (L represents the shortest distance between the two adjacent projections) in the tire of the present invention. Setting the outer diameter D of each of the projections to be D ≥ 30 × L increases friction force between a ground contact surface of the tread portion and a road surface in a more satisfactory manner and ensures high rigidity of the projection than otherwise to improve water drainage properties of the tire. Yet further, setting the outer diameter D of each of the projections to be D ≤ 100 × L ensures a sufficiently large volume of gaps between the projections and thus good water drainage properties of the tire, as described above.
A "distance between the (adjacent) projections" represents the shortest distance between the respective two adjacent projections in the present invention, as shown in FIG. 3A and FIG. 3B. Such a "distance between the projections" can be measured, for example, by photographing a ground contact surface of the tread portion by using an electron microscope.

It is preferable in the tire of the present invention to form a large number of the projections having the outer diameter D ≤ 70 µm evenly in at least a portion of a ground contact surface of the tread.
Forming a large number of the projections evenly in at least a portion of a ground contact surface of the tread (a tread surface brought into contact with a road surface in running of the tire) as described above makes it possible to increase friction force between a surface of the tire and a road surface and further improve on-ice and on-snow performances of the tire in an isotropic manner, while well suppressing deterioration of block rigidity. The outer diameter of each of the projections ≤ 70 µm successfully suppresses deterioration of water drainage properties of the tire.
In short, forming a large number of the projections evenly makes it possible to isotropically increase friction force and improve water drainage properties; and setting the outer diameter of each of the projections ≤ 70 µm ensures a sufficiently large volume of gaps between the projections to improve water drainage properties of the tire, as described above.
In the present invention, "forming a large number of the projections evenly" represents forming the projections such that number density of the projections is substantially constant in any cross section of a ground contact surface of the tread portion. Specifically, "forming a large number of the projections evenly" represents a state where the largest number density of the projections at a cross section in which the number density is largest is ≤ 3 × the smallest number density of the projections at a cross section in which the number density is smallest.

In the tire of present invention, the ten point height of irregularities Rz at a ground contact surface of the tread portion thereof due to the hemispherical projections is in the range of 1 µm to 50 µm.
Rz ≥ 1 µm ensures a sufficiently large volume of gaps for water drainage and Rz ≤ 50 µm ensures that a satisfactorily large area is brought into contact with a road surface, which contribute to further improvement of on-ice and on-snow performances of the tire. In the present invention, the "ten point height of irregularities Rz" is to be measured according to the regulations of JIS B0601(1994), wherein the reference length is 0.8 mm and the evaluation length is 4 mm.

A mean spacing S at local peaks of the projections 9 formed in a ground contact surface of the tread portion of the tire is preferably in the range of 5.0 µm to 100 µm.
The mean spacing S ≥ 5.0 µm ensures a sufficiently large volume of gaps for water drainage and the mean spacing S ≤ 100 µm ensures that a satisfactorily large area is brought into contact with a road surface, which contribute to further improvement of on-ice and on-snow performances of the tire.
In the present invention, the "mean spacing at local peaks" is to be measured according to the regulations of JIS B0601(1994), wherein the reference length is 0.8 mm and the evaluation length is 4 mm.

The size distribution, based on number, of the outer diameter D of the projections preferably includes i) 5 µm ≤ D < 30 µm: 50-60 %, ii) 30 µm ≤ D < 50 µm: 15-20 %, and iii) 50 µm ≤ D ≤ 70 µm: 10-20 %.
The size distribution, based on number, of the outer diameter D of the projections set as described above causes the projections to be densely provided and thus increases a ground contact area of the tire, thereby contributing to improvement of on-ice and on-snow performances of the tire.
In this connection, presence of the projections each having the outer diameter < 5 µm and the projections each having the outer diameter > 100 µm is tolerated but the proportion thereof is preferably 10% or less with respect to the total number of the projections.

The aforementioned tire can be manufactured by using a mold for molding a tire described below without any particular limitation thereto. The conventional method is applicable when a tire is molded by using the mold for molding a tire described below.

### <Mold for molding a tire>

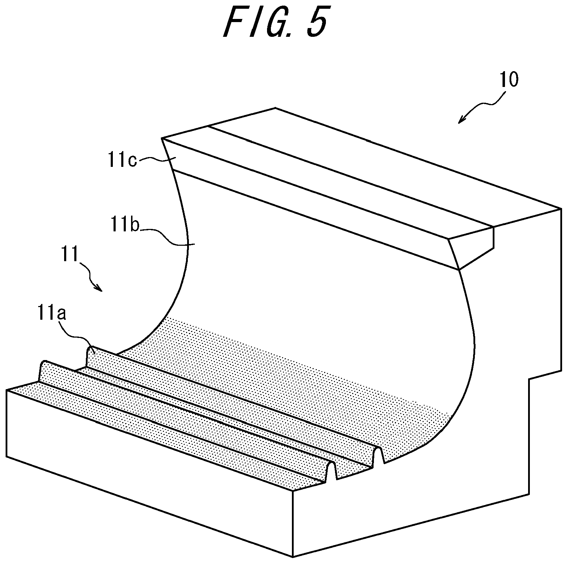

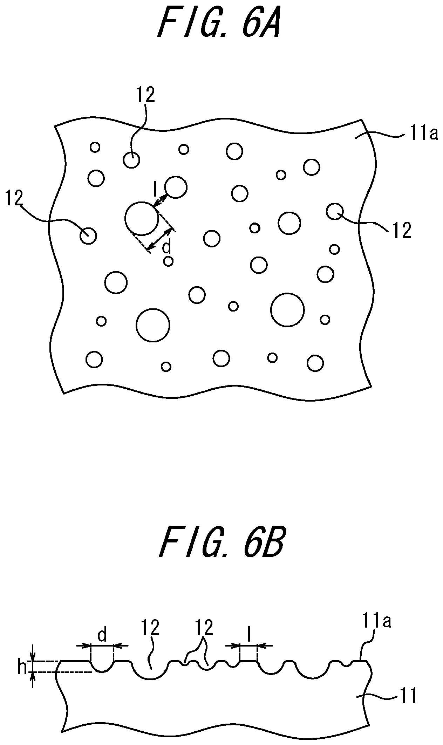

FIG. 5 is a schematic partial perspective view showing a portion of a mold for molding a tire for use in molding the tire of the present invention.
The mold 10 has a molding surface 11 for vulcanization-molding a tire, as shown in FIG. 5.
The molding surface 11 includes a ground contact surface molding surface 11a for molding a ground contact surface of a tread portion of the tire. The molding surface 11 also includes a sidewall portion molding surface 11b for molding an outer surface of a sidewall portion and a bead portion molding surface 11c for molding an outer surface of a bead portion in the example shown in FIG. 5.
The molding surface 11 can be formed of aluminum, for example, although a material thereof is not particularly limited thereto.
A ground contact surface of the tread portion having the surface configurations as described above of the tire of the present invention can be formed by the tire vulcanization mold 10 provided with the ground contact surface molding surface 11a having surface configurations corresponding to the surface configurations of the tire of the present invention. Specifically, as shown in FIG. 6A as an enlarged plan view of a ground contact surface molding surface 11a of the mold 10 and FIG. 6B as an enlarged cross sectional view, in the tire width direction, of the ground contact surface molding surface 11a side of the mold 10, a large number of recessed portions 12 are formed at the entire ground contact surface molding surface 11a for molding a ground contact surface of the tread portion of the tire, of the mold 10 for molding a tire according to the present embodiment. The recessed portions 12 each have the center of curvature thereof located on the external side of the mold 10 (i.e. on the inner side in the tire radial direction of the ring-shaped molds 10 in the assembled state) and a radius of curvature thereof in the range of 1 µm to 70 µm (inclusive of 1 µm and 70 µm). FIGS. 6A and 6B respectively show that the recessed portions 12 are hemispherical.
Specifically, the surface configurations of the ground contact surface molding surface 11a of the mold 10 are transferred, as they are, to surface configurations of a ground contact surface of a tread portion of a tire in a vulcanization process of the tire using the mold 10. As a result, a large number of the projections 9, each having a convex shape (a hemispherical shape in the present embodiment) protruding on the outer side in the tire radial direction, the center of curvature thereof located on the inner side in the tire radial direction of the ground contact surface of the tread portion, and a radius of curvature thereof in the range of 1 µm to 70 µm (inclusive of 1 µm and 70 µm), are formed in the ground contact surface of the tread portion of the tire thus manufactured. Accordingly, a tire capable of exhibiting good on-ice and on-snow performances can be manufactured. The mold of the present invention may have the recessed portions each formed to have the center of curvature located on the external side of the mold and a radius of curvature of either < 1 µm or > 70 µm. In this case, however, the number of the recessed portions each having the center of curvature located on the external side of the mold and a radius of curvature of either < 1 µm or > 70 µm is preferably 10% or less of the total number of the recessed portions. A sufficiently large number of the projections can be formed in the ground contact surface of the tread portion of the tire when the number of the recessed portions each having the center of curvature located on the external side of the mold and a radius of curvature of either < 1 µm or > 70 µm is preferably 10% or less of the total number of the recessed portions.
"The number of the recessed portions each having a radius of curvature of either < 1 µm or > 70 µm" can be counted by photographing the ground contact surface molding surface by using an electron microscope.
A method for forming the ground contact surface molding surface 11a of the mold 10 will be described hereinafter.

The ground contact surface molding surface 11a can be formed by a blast material-blasting process, i.e. blasting, as a blast material, blast particles having specific shapes onto a molding surface of the mold and making the blasting particles impinge on the molding surface. A ground contact surface molding surface of a mold for molding a tire obtained by such a blasting material-blasting process as described above has a large number of the recessed portions 12 each possessing the center of curvature thereof located on the external side of the mold 10 and a radius of curvature thereof in the range of 1 µm to 70 µm, whereby a ground contact surface of a tread portion of a tire subjected to vulcanization molding using this mold has a large number of the projections 9, each having a convex shape protruding on the outer side in the tire radial direction, the center of curvature thereof located on the inner side in the tire radial direction of the ground contact surface of the tread portion, and a radius of curvature thereof in the range of 1 µm to 70 µm.
In the blast material-blasting process of the present embodiment, the entire portion/a portion of the ground contact surface molding surface 11a is preferably formed by blasting spherical blast particles each having sphericality of 15 µm onto a molding surface of the mold and making the blasting particles impinge on the molding surface. A large number of recessed portions having the desired configurations can be formed in a ground contact surface molding surface of the mold by setting sphericity of each of the spherical blast particles to be ≤ 15 µm. As a result, a ground contact surface of a tread portion of a tire, subjected to molding by the mold, can naturally have the desired surface configurations.

In this connection, sphericity of each of the spherical blast particles is preferably ≤ 10 µm. A large number of recessed portions having the desired configurations can be easily formed in a ground contact surface molding surface of the mold by setting sphericity of each of the spherical blast particles to be ≤ 10 µm. As a result, it is possible to form, by molding a tire by using the mold, a large number of the projections having the desired configurations in a ground contact surface of the tread portion of the tire, so that the tire thus molded can exhibit good on-ice and on-snow performances.
Sphericity of each of the spherical blast particles is more preferably ≤ 5 µm.
Recessed portions having the desired configurations can be more easily formed in a ground contact surface molding surface of the mold by setting sphericity of each of the spherical blast particles to be ≤ 5 µm.

The average particle diameter of the blast material for use in the blast material-blasting process is preferably in the range of 10 µm to 1 mm.
A mold having recessed portions of the desired configurations formed in a ground contact surface molding surface thereof can be easily obtained and the blast material is well prevented from splashing onto the surroundings when the blast material is blasted under high pressure in the blast material-blasting process, by setting the average particle diameter of the blast material to be ≥ 10 µm. Further, early abrasion of the molding surface of the mold can be suppressed by setting the average particle diameter of the blast material to be ≤ 1 mm.
In this connection, the average particle diameter of the blast material is more preferably in the range of 20 µm to 0.7 mm and further more preferably in the range of 30 µm to 0.5 mm for the same reasons as described above. In the present invention, "the average particle diameter" represents the ten-sample average value obtained by: photographing a blast material by using a SEM; arbitrarily selecting ten blast particles of the blast material from the photographed image; measuring diameters of the inscribed circle and the circumscribed circle of each of the ten particles and calculating the average of the two diameters; regarding the average as the diameter of the particle; and calculating the average of the diameters of the ten particles to regard the average as the ten-sample average value.

Mohs hardness of the blast material is preferably in the range of 2 to 10.
A mold having recessed portions of the desired configurations formed in a ground contact surface molding surface thereof can be easily obtained by setting Mohs hardness of the blast material to be ≥ 2. The mold is well prevented from being damaged at an early stage, by setting Mohs hardness of the blast material to be ≤ 10.
Mohs hardness of the blast material is more preferably in the range of 3.0 to 9.0 and further more preferably in the range of 5.0 to 9.0 for the same reasons as described above. Mohs hardness of the mold for molding a tire is preferably in the range of 2.0 to 5.0. In this connection, difference in Mohs hardness between the blast material and the mold for molding a tire is preferably 3.0 to 5.0.

Gravity of the blast material is preferably in the range of 0.5 to 20.
Setting gravity of the blast material to be ≥ 0.5 suppresses splash of the blast material in the blast material-blasting process and improves workability. Setting gravity of the blast material to be ≤ 20 decreases energy required for accelerating the blast material and suppresses early wear on the mold.
Gravity of the blast material is more preferably in the range of 0.8 to 18 and further more preferably in the range of 1.2 to 15 for the same reasons as described above.

Preferable examples of a raw material for the blast material include zircon, iron, cast iron, ceramics, and the like, although the raw material is not particularly limited thereto.

It is preferable to blast the blast material onto a ground contact surface molding surface of the mold with compressed air (100 kPa to 1000 kPa) for 30 seconds to 10 minutes in the blast material-blasting process.
The ground contact surface molding surface of the mold can be uniformly processed to have the desired configurations by blasting the blast material at 100 kPa or higher for at least 30 seconds. On the other hand, damage caused to the ground contact surface molding surface can be suppressed by blasting the blast material at 1000 kPa or lower for no longer than 10 minutes.
The blasting speed of the blast material is set to preferably 0.3 (m/second) to 10 (m/second) and more preferably 0.5 (m/second) to 7 (m/second) by adjusting the gravity of the blast material and/or the blasting pressure.
In this connection, a distance between a nozzle for blasting the blast material and the mold for molding a tire is preferably in the range of 50 mm to 200 mm.
In the present invention, "blasting process time" of the blast material represents blasting process time per one mold piece. Accordingly, in a case where a tire is molded by using nine mold pieces, for example, it is preferable to blast nine ground contact surface molding surfaces of the nine mold pieces for molding one tire, respectively, for 270 seconds to 90 minutes in total.
An operator may blast the blast material onto a ground contact surface molding surface of each mold piece such that the operator, considering the configuration of the mold piece, gradually shifts a blasting position. The blast material can be uniformly blasted by employing such a method.

It is preferable that the mold 10 has a large number of the recessed portions 12 each possessing the center of curvature located on the external side of the mold and a radius of curvature in the range of 1 µm to 50 µm (inclusive of 1 µm and 50 µm). By this arrangement, it is possible to mold a tire such that at least a portion of a ground contact surface of a tread portion of the tire thus molded has a large number of the projections formed therein, each projection having a convex shape protruding on the outer side in the tire radial direction, the center of curvature thereof located on the inner side in the tire radial direction of the ground contact surface of the tread portion, and a radius of curvature thereof in the range of 1 µm to 50 µm, i.e. mold a tire exhibiting further improved on-ice and on-snow performances. The radius of curvature of the recessed portion 12 can be controlled by adjusting particle diameter, blasting angle, and the like of the blast material. Specifically, the larger particle diameter of the blast material results in the larger radius of curvature of the recessed portion 12.

The recessed portion 12 of the mold 10 has a hemispherical shape. The hemispherical recessed portion 12 can form the hemispherical projection 9 at a ground contact surface of the tread portion of the tire. The shape of the recessed portion 12 can be controlled by adjusting particle diameter, blasting speed, and blasting angle of the blast material.

The depth h of each of the recessed portions 12 of the mold 10 is preferably in the range of 1 µm to 50 µm. The projections 9 each having a height in the range of 1 µm to 50 µm can be formed in a ground contact portion of the tread portion of the tire by setting the depth h of the recessed portion to be 1 µm to 50 µm. The depth h of the recessed portion 12 can be controlled by adjusting blasting speed of the blast material. Specifically, the larger blasting speed results in the larger depth h of the recessed portion 12.
In the present invention, the "depth of the recessed portion 12" represents, provided that: a third imaginary plane is an imaginary plane passing through the deepest portion (the innermost bottom end in the mold-radial direction) of the recessed portion 12 to extend orthogonal to the tire radial direction; and a fourth imaginary plane is an imaginary plane closest to the third imaginary plane among the imaginary planes adjacent to the mold-radial direction outermost contour line of the recessed portion 12 and extending orthogonal to the tire radial direction, a distance in the radial direction between the third imaginary plane and the fourth imaginary plane. The "mold-radial direction" represents a radial direction of the annular ground contact surface molding surfaces of the mold pieces, which corresponds to the tire radial direction of a tire molded by the mold 10 (but the outer/inner side of the mold-radial direction is opposite to the outer/inner side of the tire radial direction).
The depth of each of the recessed portions 12 can be measured by a SEM or the like.

The mold for molding a tire of the present invention has a ground contact surface molding surface for molding a ground contact surface of a tread portion of a tire and it is preferable that at least a portion of the ground contact surface molding surface has a large number of collapsed foam-like recessed portions having an outer diameter of 5 µm to 70 µm formed therein. It is possible to mold a tire, including a large number of solid foam-shaped projections having an outer diameter D in the range of 5 µm to 70 µm formed in at least a portion of a ground contact surface of a tread portion thereof and thus exhibiting good on-ice and on-snow performances, by forming a large number of collapsed foam-like recessed portions having an outer diameter of 5 µm to 70 µm in at least a portion of the ground contact surface molding surface.
An "outer diameter" of each of the collapsed foam-like recessed portions represents the maximum diameter of the collapsed foam-like recessed portion in a plan view in the present invention. Such an "outer diameter" of each of the collapsed foam-like recessed portions can be measured by photographing a ground contact surface molding surface of the mold by using an electron microscope. Further, in the present invention, a "collapsed foam-like recessed portion" represents a recessed portion having a configuration corresponding to an external configuration of a foam-like body, which recessed portion would be formed after the foam-like body has collapsed at a position where the foam-like body used to exist. Examples of a "collapsed foam-like configuration" of the recessed portion include a hemispherical configuration, a truncated hemispherical configuration, and the like.
The mold of the present invention may have the collapsed foam-like recessed portions having an outer diameter d of either < 5 µm or > 70 µm formed at the ground contact surface molding surface thereof. In this case, however, the number of the collapsed foam-like recessed portions having an outer diameter d of either < 5 µm or > 70 µm is preferably 10% or less of the total number of the collapsed foam-like recessed portions. A sufficiently large number of the solid foam-shaped projections can be formed in a ground contact surface of a tread portion of a tire when the proportion of the collapsed foam-like recessed portions each having an outer diameter d of either < 5 µm or > 70 µm is 10% or less with respect to the collapsed foam-like recessed portions as a whole.
The outer diameter d of the collapsed foam-like recessed portion 12 of the mold 10 is preferably in the range of 10 µm to 20 µm. It is possible to form the solid foam-shaped projections 9 each having an outer diameter D in the range of 10 µm to 20 µm in a ground contact surface of a tread portion of a tire by setting the outer diameter d of the collapsed foam-like recessed portion 12 of the mold 10 to be in the range of 10 µm to 20 µm.
The outer diameter d of the collapsed foam-like recessed portion 12 can be controlled by adjusting particle diameter of the blast material. Specifically, the larger particle diameter of the blast material results in the larger outer diameter d of the collapsed foam-like recessed portion 12.
The number of "the collapsed foam-like recessed portions each having an outer diameter d of either < 5 µm or > 70 µm" can be counted by photographing the ground contact surface molding surface by using an electron microscope.
The collapsed foam-like recessed portion 12 of the mold 10 preferably has a hemispherical shape. The collapsed foam-like recessed portion 12 having a hemispherical shape can form the hemispherical solid foam-shaped projections 9 at a ground contact surface of the tread portion of the tire. The shape of the collapsed foam-like recessed portion 12 can be controlled by adjusting particle diameter and blasting angle of the blast material.

Further, the mold for molding a tire of the present invention has a ground contact surface molding surface for molding a ground contact surface of a tread portion of a tire. At least a portion of the ground contact surface molding surface has a plurality of recessed portions formed such that each of the recessed portions has an outer diameter d in the range of 5 µm to 70 µm and that d also satisfies 0 × I < d ≤ 100 × I, wherein I represents the shortest distance between the two adjacent recessed portions.
It is possible to mold a tire which includes a large number of projections having an outer diameter in a specific range formed in at least a portion of a ground contact surface of a tread portion thereof and thus exhibits good on-ice and on-snow performances, by forming a plurality of the recessed portions in at least a portion of the ground contact surface molding surface and setting the outer diameter d of each of the recessed portions to be in the range of 5 µm to 70 µm and satisfy 0 × I < d ≤ 100 × I, wherein I represents the shortest distance between the two adjacent recessed portions as described above. Specifically, the configurations of the recessed portions of the ground contact surface molding surface of the mold are transferred, as they are, to configurations of the projections of a ground contact surface of a tread portion of a tire in a vulcanization process of the tire using the mold. As a result, the projections are formed at the ground contact surface of the tread portion of the tire thus manufactured such that each of the projections has an outer diameter D in the range of 5 µm to 70 µm and that D also satisfies 0 × L < D ≤ 100 × L, wherein L represents a distance between the two adjacent projections.
The mold of the present invention may have the recessed portions having an outer diameter d of either < 5 µm or > 70 µm formed at the ground contact surface molding surface thereof. In this case, however, the number of the recessed portions having an outer diameter d of either < 5 µm or > 70 µm is preferably 10% or less of the total number of the recessed portions. A sufficiently large number of the projections can be formed in a ground contact surface of a tread portion of a tire when the proportion of the recessed portions each having an outer diameter d of either < 5 µm or > 70 µm is 10% or less with respect to the recessed portions as a whole.
In this connection, if the ground contact surface molding surface of the mold of the present invention includes the recessed portions each having an outer diameter d of either < 5 µm or > 70 µm formed therein, it is preferable that the outer diameters d of the recessed portions unanimously satisfy 0 × I < d ≤ 100 × I, wherein I represents the shortest distance between the two adjacent recessed portions. It is possible to form the projections with adequate intervals therebetween in a ground contact surface of a tread portion of a tire by setting the outer diameter d of each of the recessed portions to satisfy 0 × I < d ≤ 100 × I, wherein I represents the shortest distance between the two adjacent recessed portions.
The outer diameter d of each of the recessed portions of the mold is preferably in the range of 10 µm to 20 µm. It is possible to form the projections each having an outer diameter D in the range of 10 µm to 20 µm in a ground contact surface of a tread portion of a tire by setting the outer diameters d of the recessed portions of the mold to be in the range of 10 µm to 20 µm, respectively. The outer diameter d of the recessed portion can be controlled by adjusting particle diameter and the like of the blast material. Specifically, the larger particle diameter of the blast material results in the larger outer diameter d of the recessed portion.
Further, the outer diameter d of each of the recessed portions of the mold preferably satisfies 30 × I < d ≤ 100 × I, wherein I represents the shortest distance between the two adjacent recessed portions. It is possible to form the projections each having an outer diameter D satisfying 0 × L < D ≤ 100 × L, wherein L represents a distance between the two adjacent projections, in a ground contact surface of a tread portion of a tire by setting the outer diameter d of each of the recessed portions to satisfy 30 × I < d ≤ 100 × I, wherein I represents the shortest distance between the two adjacent recessed portions. The shortest distance I between the two adjacent recessed portions can be controlled by adjusting particle diameter and the like of the blast material. Specifically, the larger particle diameter of the blast material results in the smaller shortest distance I.
The number of the recessed portions each having an outer diameter d of either < 5 µm or > 70 µm can be counted by photographing the ground contact surface molding surface by using an electron microscope.
An "outer diameter" of each of the recessed portions represents the maximum diameter of the recessed portion in a plan view in the present invention. A "distance between the recessed portions" represents the shortest distance between respective two adjacent recessed portions in the present invention. Such an "outer diameter" of each of the recessed portions and a "distance between the recessed portions" can be measured by photographing a ground contact surface molding surface of the mold by using an electron microscope.

The mold for molding a tire of the present invention has a ground contact surface molding surface for molding a ground contact surface of a tread portion of a tire and it is preferable that a large number of the recessed portions each having an outer diameter of ≤ 70 µm are uniformly formed in at least a portion of the ground contact surface molding surface.
It is possible to mold a tire, which includes a large number of the projections having an outer diameter D of ≤ 70 µm formed in at least a portion of a ground contact surface thereof and thus exhibits good on-ice and on-snow performances, by evenly forming a large number of the recessed portions having an outer diameter of ≤ 70 µm in at least a portion of the ground contact surface molding surface.
In this connection, it is preferable that a large number of the recessed portions having an outer diameter of ≤ 20 µm are formed in at least a portion of the ground contact surface molding surface of the mold. By such an arrangement as described above, it is possible to uniformly form a large number of the projections having an outer diameter D of ≤ 20 µm in at least a portion of a ground contact surface of a tread portion of a tire subjected to the molding, i.e. mold a tire capable of exhibiting good on-ice and on-snow performances.
In the present invention, "forming a large number of the recessed portions evenly" represents forming the recessed portions such that number density of the recessed portions is substantially constant in any cross section of the ground contact surface molding surface of the mold. More specifically, "forming a large number of the recessed portions evenly" represents a state where the largest number density of the recessed portions at a cross section in which the number density is largest is ≤ 3 × the smallest number density of the recessed portions at a cross section in which the number density is smallest.
The outer diameter d of the recessed portion 12 can be controlled by adjusting particle diameter of the blast material. Specifically, the larger particle diameter of the blast material results in the larger outer diameter d of the recessed portion 12.
Uniform formation of the recessed portions in a ground contact surface molding surface of the mold can be controlled by decreasing particle diameter of the blast material.

The ten point height of irregularities Rz of the ground contact surface molding surface of the mold is in the range of 1.0 µm to 50 µm because then it is possible to mold a tire in which a ground contact surface of a tread portion has ten point height of irregularities Rz in the range of 1.0 µm to 50 µm.
In this connection, a mold for molding a tire provided with a ground contact surface molding surface having the ten point height of irregularities Rz within the aforementioned range can be obtained by setting the average particle diameter of the blast material for use in the blast material-blasting process to be in the range of 50 µm to 400 µm.

A mean spacing at local peaks of the recessed portions formed in a ground contact surface molding surface of the mold is preferably in the range of 5.0 µm to 100 µm because then it is possible to mold a tire in which a mean spacing S at local peaks of the projections formed in a ground contact surface of the tread portion of the tire is in the range of 5.0 µm to 100 µm.
In this connection, a mold for molding a tire provided with a ground contact surface molding surface having the mean spacing S within the aforementioned range can be obtained by setting the average particle diameter of the blast material for use in the blast material-blasting process to be in the range of 50 µm to 400 µm.

The size distribution, based on the number, of the outer diameter d of the recessed portions in a ground contact surface molding surface of the mold preferably includes i) 5 µm ≤ d < 30 um : 50-60 %, ii) 30 µm ≤ d < 50 µm : 15-20 %, and iii) 50 µm ≤ d ≤ 70 µm: 10-20 %. Presence of the recessed portions each having the outer diameter < 5 µm and the recessed portions each having the outer diameter > 100 µm is tolerated but the proportion thereof is preferably 10% or less with respect to the total number of the recessed portions.
It is possible to mold a tire having a size distribution, based on number, of the outer diameter D of the projections including i) 5 µm ≤ D < 30 µm: 50-60 %, ii) 30 µm ≤ D < 50 µm: 15-20 %, and iii) 50 µm ≤ D ≤ 70 µm: 10-20 % by setting the size distribution, based on the number, of the outer diameter of the recessed portions in a ground contact surface molding surface of the mold, as described above.
Further, it is possible to obtain a mold for molding a tire, equipped with a ground contact surface molding surface having the recessed portions formed therein of which outer diameter distribution satisfies the aforementioned range, by setting the size distribution, based on the number, of particle diameter p of the blast material for use in the blast material-blasting process to include i) 50 µm ≤ p < 200 µm: 10-20 %, ii) 200 µm ≤ p < 300 µm: 50-60 %, and iii) 300 µm ≤ p ≤ 400 µm: 10-20 %. Presence of the blast material having the average particle diameter < 50 µm and the blast material having the average particle diameter > 400 µm is tolerated in this regard.

### Examples

The present invention will be described further in detail by Examples below. It should be noted that the present invention is not restricted by any means by these Examples.

### (Manufacture of a mold for molding a tire)

Test molds 1 to 5 each for molding a tire were each prepared by blasting a (ceramic-based) blast material onto a ground contact surface molding surface of a mold made of, e.g. aluminum, under varied blasting conditions (blasting pressure, blasting speed, and the like), such that the ground contact surface molding surface of each test mold had the surface characteristics as shown in Table 1. The resulting surface characteristics of the ground contact surface molding surface of each of the molds thus prepared were analyzed by using a SEM and a microscope.

**Table 1**

| | Mold 1 | Mold 2 | Mold 3 | Mold 4 | Mold 5 |
|---|---|---|---|---|---|
| | Conventional Example | Comparative Example | Comparative Example | Present Example | Present Example |
| Presence/absence of recessed portion | Absent | Present | Present | Present | Present |
| Configuration of recessed portion | - | Sharply edged | Hemispherical | Hemispherical | Hemispherical |
| Outer diameter of recessed portion [µm] | - | 60 | 150 | 20 | 50 |
| Outer diameter of recessed portion/ distance between recessed portion [-] | - | 50 | 30 | 90 | 20 |
| Uniformity of recessed portion arrangement | - | Uniform | Uniform | Uniform | Uniform |
| Position of center of curvature of recessed portion surface | - | Inner side on radial direction of mold | Inner side on radial direction of mold | Inner side on radial direction of mold | Inner side on radial direction of mold |
| Radius of curvature of recessed portion surface [µm] | - | 500 | 90 | 30 | 60 |

| | | | | | |
|---|---|---|---|---|---|
| * "Present Example" represents Example according to the present invention. | | | | | |

### (Manufacture of tire)

Test tires 1 to 5 each having tire size: 205/55R16 were prepared according to the conventional method by using the test molds 1 to 5 each for molding a tire thus prepared. The resulting surface characteristics of a ground contact surface of a tread portion of each of the test tires thus prepared were analyzed by using a SEM and a microscope. The results are shown in Table 2.

Further, on-ice performance and on-snow performance of each of the test tires thus prepared were evaluated by the following evaluation methods. The results of the evaluations are also shown in Table 2.

### <On-ice performance>

On -ice performance of each of the test tires was evaluated by: assembling the test tire which had just been prepared, with an application rim; inflating the tire at the normal internal pressure prescribed in JATMA and mounting the tire thus inflated on a vehicle; measuring a coefficient of friction on ice of the tire on a frozen road under the conditions of vehicle speed: 30 km/hour and load per one front wheel: 4.3 kN; and converting the coefficient of friction on ice of the tire thus measured to an index value relative to "100" as the coefficient of friction on ice of test tire 1. The results are shown in Table 2. The larger index value represents the larger coefficient of friction on ice, i.e. the better on-ice performance of the tire.

### <On-snow performance>

On -snow performance of each of the test tires was evaluated by: assembling the test tire which had just been prepared, with an application rim; inflating the tire at the normal internal pressure prescribed in JATMA and mounting the tire thus inflated on a vehicle; measuring a coefficient of friction on snow of the tire on a snow-covered road under the conditions of vehicle speed: 30 km/hour and load per one front wheel: 4.3 kN; and converting the coefficient of friction on snow of the tire thus measured to an index value relative to "100" as the coefficient of friction on snow of test tire 1. The results are shown in Table 2. The larger index value represents the larger coefficient of friction on snow, i.e. the better on-snow performance of the tire.

**Table 2**

| | Mold 1 | Mold 2 | Mold 3 | Mold 4 | Mold 5 |
|---|---|---|---|---|---|
| | Conventional Example | Comparative Example | Comparative Example | Present Example | Present Example |
| Presence/absence of recessed portion | Absent | Present | Present | Present | Present |
| Configuration of recessed portion | - | Sharply edged | Hemispherical | Hemispherical | Hemispherical |
| Outer diameter of recessed portion [µm] | - | 60 | 150 | 20 | 50 |
| Outer diameter of recessed portion/ distance between recessed portion [-] | - | 50 | 30 | 90 | 20 |
| Uniformity of recessed portion arrangement | - | Uniform | Uniform | Uniform | Uniform |
| Position of center of curvature of recessed portion surface | - | Inner side on radial direction of mold | Inner side on radial direction of mold | Inner side on radial direction of mold | Inner side on radial direction of mold |
| Radius of curvature of recessed portion surface [µm] | - | 500 | 90 | 30 | 60 |
| On-ice performance | 100 | 102 | 98 | 115 | 112 |
| On-snow performance | 100 | 101 | 99 | 112 | 110 |

It is understood from Table 2 that the tires of Present Examples exhibit significantly better on-ice performance and on-snow performance than the tires of Conventional Example and Comparative Example.

### INDUSTRIAL APPLICABILITY

According to the present invention, it is possible to provide a tire capable of exhibiting excellent on-ice and on-snow performances and a mold for molding a tire, capable of molding the tire.

### REFERENCE SIGNS LIST

- 1: Tread portion
- 2: Projection
- 3: Gap
- 4: Bead portion
- 4a: Bead core
- 5: Sidewall portion
- 6: Tread portion
- 7: Carcass
- 8: Belt
- 8a, 8b: Belt layer
- 9: Projection
- 10: Mold
- 11: Molding surface
- 11a: Ground contact surface molding surface
- 11b: Sidewall portion molding surface
- 11c: Bead portion molding surface
- 12: Recessed portion
- 20: Tire
- T: Road surface

## Claims

1. A tire (20), at least comprising:
a tread portion having a ground contact surface; and
a plurality of projections (9) formed in at least a portion of the ground contact surface and each having a hemispherical shape protruding on the outer side in the tire radial direction, wherein each of the projections (9) has the center of curvature thereof located on the inner side in the tire radial direction of the ground contact surface, a radius of curvature thereof in the range of ≥ 1 µm to ≤ 70 µm and an outer diameter D thereof is in the range of 0 x L < D ≤ 100 x L, wherein L is a distance between two adjacent projections and is > 0 and wherein D is in the range of 5 µm to 70 µm; and
the ten point height of irregularities Rz at the ground contact surface of the tread portion due to the projections is in the range of 1 µm to 50 µm, when determined according to the regulations of JIS B0601(1994).

2. The tire of claim 1, wherein the height of each of the projections is in the range of 1 µm to 50 µm.

3. The tire of claim 1, wherein a mean spacing S between peaks of the projections is in the range of 5µm to 100µm, when determined according to the regulation of JIS B0601 (1994), wherein a reference length is 0.8 µm and an evaluation length is 4 µm.

4. A mold (10) for molding a tire, comprising:
a ground contact surface molding surface (11a) for molding a ground contact surface of a tread portion of a tire (20); and
a plurality of hemispherical recessed portions (12) formed in at least a portion of the ground contact surface molding surface (11a),
wherein each of the recessed portions (12) has the center of curvature thereof located on the external side of the mold (10) and a radius of curvature thereof in the range of ≥ 1 µm to ≤ 70 µm and an outer diameter d thereof is in the range of 0 x I < d ≤ 100 x I, wherein I is a shortest distance between two adjacent recessed portions (12) and is > 0 and wherein d is in the range of 5 µm to 70 µm; and
the ten point height of irregularities Rz at the ground contact surface molding surface (11a) of the mod (10) is in the range of 1 µm to 50 µm, when determined according to the regulations of JIS B0601(1994).

5. The mold of claim 4, wherein the depth of each of the recessed portions of the mold is in the range of 1 µm to 50 µm.

6. The mold of claim 4, wherein a mean spacing S between peaks of the recessed portions is in the range of 5 µm to 100µm, when determined according to the regulation of JIS B0601 (1994), wherein a reference length is 0.8 µm and an evaluation length is 4 µm.

7. The mold (10) according to claim 4 wherein the ground contact surface molding surface (11a) is formed via a blast material blasting process whereby blast materials of specific shapes are blasted onto a molding surface of the mold and making the blasting particles impinge on the molding surface.

8. The mold (10) according to claim 7 wherein the ground contact surface molding surface (11a), entirely or partially, is formed by blasting spherical blast materials with a sphericity of 15µm or less and making the blasting particles impinge on the molding surface.

9. The mold (10) according to claim 7 wherein the average particle size of the blast materials utilized in the blast material blasting process is set to be 10µm to 1mm.

10. The mold (10) according to claim 7 wherein the specific gravity of the blast materials is set to be 0.5 to 20.

## Patentansprüche

1. Reifen (20), der wenigstens Folgendes umfasst:
einen Laufflächenabschnitt, der eine Bodenberührungsfläche hat, und
mehrere Vorsprünge (9), die in wenigstens einem Abschnitt der Bodenberührungsfläche geformt sind und jeweils eine halbkugelförmige Gestalt haben, die auf der in der Reifenradialrichtung äußeren Seite vorspringt, wobei jeder der Vorsprünge (9) einen Krümmungsmittelpunkt hat, der auf der in der Reifenradialrichtung inneren Seite der Bodenberührungsfläche angeordnet ist, wobei sein Krümmungsradius in dem Bereich von ≥ 1 µm bis ≤ 70 µm liegt und sein Außendurchmesser D in dem Bereich von 0 x L < D ≤ 100 x L liegt, wobei L eine Entfernung zwischen zwei benachbarten Vorsprüngen ist und > 0 ist und wobei D in dem Bereich von 5 µm bis 70 µm liegt, und
die Zehnpunkthöhe von Unregelmäßigkeiten Rz an der Bodenberührungsfläche des Laufflächenabschnitts auf Grund der Vorsprünge in dem Bereich von 1 µm bis 50 µm liegt, wenn sie entsprechend den Regelungen von JIS B0601 (1994) bestimmt wird.

2. Reifen nach Anspruch 1, wobei die Höhe jedes der Vorsprünge in dem Bereich von 1 µm bis 50 µm liegt.

3. Reifen nach Anspruch 1, wobei ein mittlerer Abstand S zwischen Spitzen der Vorsprünge in dem Bereich von 5 µm bis 100 µm liegt, bei einer Bestimmung entsprechend den Regelungen von JIS B0601 (1994), wobei eine Referenzlänge 0,8 µm beträgt und eine Bewertungslänge 4 µm beträgt.

4. Form (10) zum Formen eines Reifens, die Folgendes umfasst:
eine Bodenberührungsflächen-Formfläche (11a) zum Formen einer Bodenberührungsfläche eines Laufflächenabschnitts eines Reifens (20) und
mehrere halbkugelförmige ausgesparte Abschnitte (12), die in wenigstens einem Abschnitt der Bodenberührungsflächen-Formfläche (11a) geformt sind,
wobei jeder der ausgesparten Abschnitte (12) einen Krümmungsmittelpunkt hat, der auf der in der Reifenradialrichtung äußeren Seite der Form (10) angeordnet ist, und sein Krümmungsradius in dem Bereich von ≥ 1 µm bis ≤ 70 µm liegt und sein Außendurchmesser d in dem Bereich von 0 x I < d ≤ 100 x I liegt, wobei I eine kürzeste Entfernung zwischen zwei benachbarten ausgesparten Abschnitten (12) ist und > 0 ist und wobei d in dem Bereich von 5 µm bis 70 µm liegt, und
die Zehnpunkthöhe von Unregelmäßigkeiten Rz an der Bodenberührungsflächen-Formfläche (11a) der Form (10) in dem Bereich von 1 µm bis 50 µm liegt, bei einer Bestimmung entsprechend den Regelungen von JIS B0601 (1994).

5. Form nach Anspruch 4, wobei die Tiefe jedes der ausgesparten Abschnitte der Form in dem Bereich von 1 µm bis 50 µm liegt.

6. Form nach Anspruch 4, wobei ein mittlerer Abstand S zwischen Spitzen der ausgesparten Abschnitte in dem Bereich von 5 µm bis 100 µm liegt, bei einer Bestimmung entsprechend den Regelungen von JIS B0601 (1994), wobei eine Referenzlänge 0,8 µm beträgt und eine Bewertungslänge 4 µm beträgt.

7. Form (10) nach Anspruch 4, wobei die Bodenberührungsflächen-Formfläche (11a) über einen Strahlmaterial-Strahlvorgang, wodurch Strahlmaterialien mit spezifischen Formen auf eine Formfläche der Form gestrahlt werden, wodurch die Strahlteilchen auf die Formfläche aufprallen, geformt ist.

8. Form (10) nach Anspruch 7, wobei die Bodenberührungsflächen-Formfläche (11a), vollständig oder teilweise, durch Strahlen kugelförmiger Strahlmaterialien mit einer Sphärizität von 15 µm oder weniger und Aufprallenlassen der Strahlteilchen auf die Formfläche geformt ist.

9. Form (10) nach Anspruch 7, wobei die durchschnittliche Teilchengröße der Strahlmaterialien, die in dem Strahlmaterial-Strahlvorgang benutzt werden, auf 10 µm bis 1 mm festgesetzt ist.

10. Form (10) nach Anspruch 7, wobei die relative Dichte der Strahlmaterialien auf 0,5 bis 20 festgesetzt ist.

## Revendications

1. Bandage pneumatique (20), comprenant au moins :
une partie de bande de roulement comportant une surface de contact au sol ; et
plusieurs protubérances (9) formées dans au moins une partie de la surface de contact au sol et ayant chacune une forme hémisphérique débordant sur le côté externe dans la direction radiale du bandage pneumatique, dans lequel le centre de courbure de chacune des saillies (9) se situe sur le côté interne, dans la direction radiale du bandage pneumatique, de la surface de contact au sol, son rayon de courbure étant compris dans l'intervalle allant de ≥ 1 µm à ≤ 70 µm, et son diamètre extérieur (D) étant compris dans l'intervalle de 0 x L < D ≤ 100 x L, L représentant une distance entre deux protubérances adjacentes et étant > à 0 et D étant compris dans l'intervalle allant de 5 µm à 70 µm ; et
la hauteur de dix points des irrégularités Rz au niveau de la surface de contact au sol de la partie de bande de roulement étant comprise, à cause des protubérances, dans l'intervalle allant de 1 µm à 50 µm, dans le cas d'une détermination selon les dispositions de la norme JIS B0601 (1994).

2. Bandage pneumatique selon la revendication 1, dans lequel la hauteur de chacune des protubérances est comprise dans l'intervalle allant de 1 µm à 50 µm.

3. Bandage pneumatique selon la revendication 1, dans lequel l'espacement moyen S entre les crêtes des protubérances est compris dans l'intervalle allant de 5 µm à 100 µm, dans le cas d'une détermination selon les dispositions de la norme JIS B0601 (1994), une longueur de référence correspondant à 0,8 µm et une longueur d'évaluation correspondant à 4 µm.

4. Moule (10) pour mouler un bandage pneumatique, comprenant :
une surface de moulage de la surface de contact au sol (11a) pour mouler une surface de contact au sol d'une partie de bande de roulement d'un bandage pneumatique (20) ; et
plusieurs parties évidées hémisphériques (12) formées dans au moins une partie de la surface de moulage de la surface de contact au sol (11a) ;
dans lequel le centre de courbure de chacune des parties évidées (12) est situé sur le côté externe du moule (10), son rayon de courbure étant compris dans l'intervalle allant de ≥ 1 µm à ≤ 70 µm, son diamètre extérieur d étant compris dans l'intervalle de 0 x I < d ≤ 100 x 1, I représentant la distance la plus courte entre deux parties évidées adjacentes (12) et étant > à 0, et d étant compris dans l'intervalle allant de 5 µm à 70 µm ; et
la hauteur de dix points des irrégularités Rz au niveau de la surface de moulage de la surface de contact au sol (11a) du moule (10) étant comprise dans l'intervalle allant de 1 µm à 50 µm, dans le cas d'une détermination selon les dispositions de la norme JIS B0601 (1994).

5. Moule selon la revendication 4, dans lequel la profondeur de chacune des parties évidées du moule est comprise dans l'intervalle allant de 1 µm à 50 µm.

6. Moule selon la revendication 4, dans lequel un espacement moyen S entre les crêtes des parties évidées est compris dans l'intervalle allant de 5 µm à 100 µm, dans le cas d'une détermination selon les dispositions de la norme JIS B0601 (1994), une longueur de référence correspondant à 0,8 µm et une longueur d'évaluation correspondant à 4 µm.

7. Moule (10) selon la revendication 4, dans lequel la surface de moulage de la surface de contact au sol (11a) est formée par l'intermédiaire d'un processus de projection de matériaux de projection sphériques, des matériaux de projection de différentes formes étant projetées sur une surface de moulage du moule, entraînant l'impact des particules de projection sur la surface de moulage.

8. Moule (10) selon la revendication 7, dans lequel la surface de moulage de la surface de contact au sol (11a) est formée, entièrement ou en partie, par projection de matériaux de projection sphériques, présentant une sphéricité de 15 µm ou moins, et entraînement d'un impact des particules projetées sur la surface de moulage.

9. Moule (10) selon la revendication 7, dans lequel la dimension de particule moyenne des matériaux de projection utilisés dans le processus de projection de matériaux de projection est ajustée de sorte à être comprise entre 10 µm et 1 mm.

10. Moule (10) selon la revendication 7, dans lequel la densité des matériaux de projection est ajustée de sorte à être comprise entre 0,5 et 20.
